# EUROPEAN PATENT APPLICATION

(11) **EP 1 363 181 A2**
(43) Date of publication of application: **19.11.2003**
(21) Application number: 03010918.5
(22) Date of filing: 15.05.2003
(51) Int. Cl.: G06F 3/00

(54) **Force applying device**

(30) Priority: 16.05.2002 JP 2002141853
(71) Applicant: ALPS ELECTRIC CO., LTD., Tokyo 145-8501 (JP)
(72) Inventor: Onodera, Mikio, c/o Alps Electric Co., Ltd., Tokyo 145-8501 (JP); Numata, Hidetaka, c/o Alps Electric Co., Ltd., Tokyo 145-8501 (JP)
(74) Representative: Klunker . Schmitt-Nilson . Hirsch

(57) **Abstract**

A force applying device includes an operating unit for moving a cursor on a two-dimensional plane surface, actuators for applying forces to the operating unit in accordance with the movement of the operating unit, and a controlling unit for controlling the actuators. When the cursor is on a first area on the two-dimensional plane surface, a predetermined first force is applied to the operating unit. When the cursor is on a second area, a second force, which is different from the first force, is applied to the operating unit. The second force is stored in the first memory 10a, and the second area that provides the second force is disposed on the two-dimensional plane surface.

## Description

### BACKGROUND OF THE INVENTION

### 1. Field of the Invention

The present invention relates to a force applying device for applying a force to an operating unit for moving a cursor on a two-dimensional plane surface of a display, and, more particularly, to a force applying device for applying a force to an operating unit in accordance with the movement of a cursor on a two-dimensional plane surface.

### 2. Description of the Related Art

A related force applying device will be described with reference to Figs. 11 to 13. Fig. 11 is a block diagram of the related force applying device. Figs. 12A to 12G are diagrams illustrating a force pattern of generative forces of the related force applying device. Figs. 13A to 13G are diagrams illustrating another force pattern of generative forces of the related force applying device.

A knob 51, used as an operating unit, is tiltably disposed for moving a cursor (not shown) on a two-dimensional plane surface of a display.

An X position sensor 52 detects the degree of tilting of the knob 51 and determines the position of the cursor in the X direction on the display.

A Y position sensor 53 detects the degree of tilting of the knob 51 and determines the position of the cursor in the Y direction on the display.

An X actuator 54 is, for example, a motor, and applies a force (generative force) upon the knob 51 in the X direction.

A Y actuator 55 is, for example, a motor, and applies a force (generative force) upon the knob 51 in the Y direction.

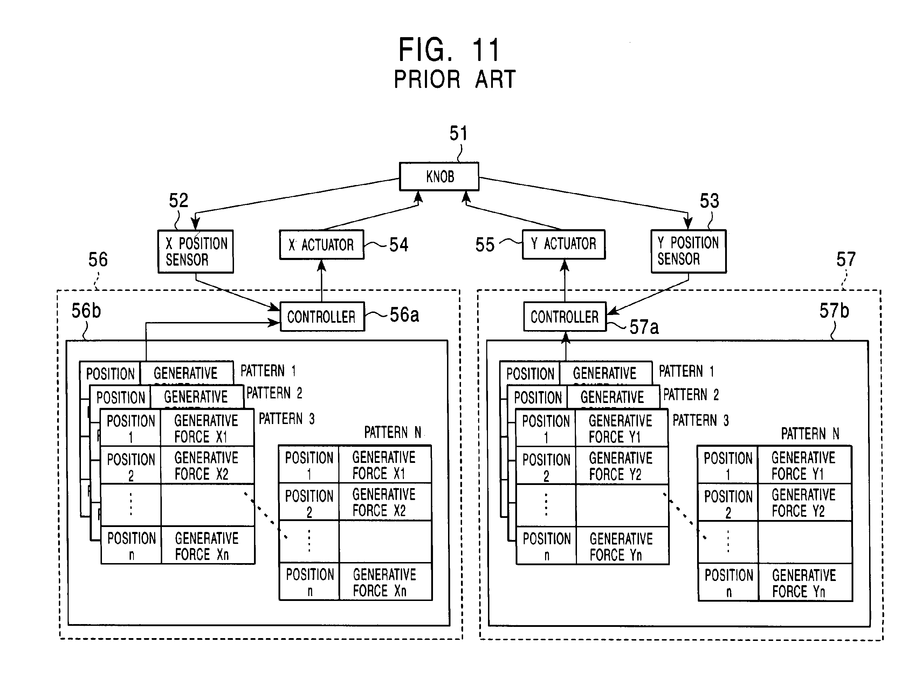

As shown in Fig. 11, a first controlling unit 56 comprises a controller 56a and a first memory 56b. The first memory 56b stores various tables (pattern 1, pattern 2, pattern 3, ..., pattern N) of generative forces (generative force X1, generative force X2, ..., a generative force Xn) in the X direction applied to the knob 51 in accordance with various coordinate positions of the two-dimensional plane surface of the display. The controller 56a selects a specified table from the various tables stored in the first memory 56b, and sends an instruction to the X actuator 54 so that the X actuator 54 outputs a generative force stored in the selected table.

As shown in Fig. 11, a second controlling unit 57 comprises a controller 57a and a second memory 57b. The second memory 57b stores various tables (pattern 1, pattern 2, pattern 3, ..., pattern N) of generative forces (generative force Y1, generative force Y2, ..., generative force Yn) in the Y direction applied to the knob 51 in accordance with various coordinate positions on the two-dimensional plane surface of the display. The controller 57a selects a specified table from the various tables stored in the second memory 57b, and sends an instruction to the Y actuator 55 so that the Y actuator 55 outputs a generative force stored in the selected table.

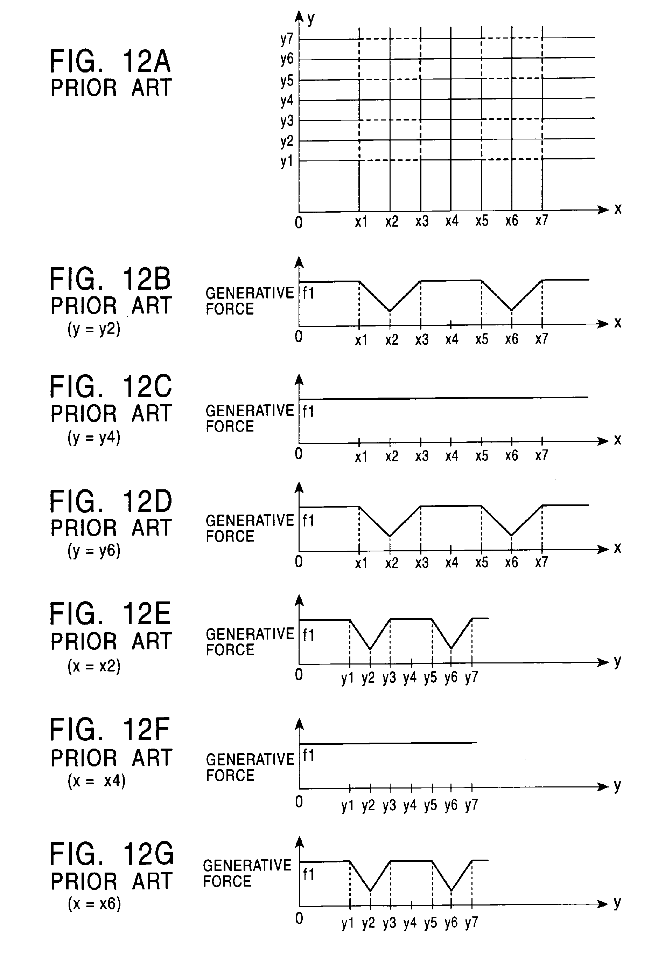

The relationships between the generative forces and the coordinate positions of a tables (pattern 1) are shown in the form of graphs in Figs. 12A to 12G. The generative forces are applied to the knob 51 when the cursor is at various coordinate positions on the two-dimensional plane surface. The knob 51 is subjected to the resultant force of a generative force in the X direction and a generative force in the Y direction. As shown in Fig. 12A, there are a plurality of rectangular areas defined by dotted lines and an area other than these rectangular areas. At the area other than the rectangular areas, the generative forces applied to the knob 51 are constant values f1 in both the X and Y directions. At the rectangular areas, the generative forces applied to the knob 51 change in both the X and Y directions.

Fig. 12B shows a force pattern portion of generative forces in the X direction applied to the knob 51 in terms of X positions when the Y position is constant (y = y2). The generative force in the X direction is constant at f1 near zero. When the x coordinate changes towards x1, and becomes x1, the generative force starts to decrease; at x = x2, it stops decreasing and starts to increase; at x = x3, it stops increasing and becomes the constant value f1 again. When the x coordinate changes further towards x5, and becomes x5, the generative force starts to decrease; at x = x6, it stops decreasing and starts increasing; and, at x = x7, it stops increasing and becomes the constant value f1 again.

Fig. 12C shows a force pattern portion of generative forces in the X direction applied to the knob 51 in terms of the X positions when the Y position is constant (y = y4). A line at y = y4 does not pass through any of the areas defined by the dotted lines on the two-dimensional plane surface, so that the generative force in the X direction of the force pattern is a constant value F1 regardless of the x coordinate.

Fig. 12D shows a force pattern portion of generative forces in the X direction applied to the knob 51 in terms of the X positions when the Y position is constant (y = y6). The generative force in the X direction of the force pattern portion changes in exactly the same way as the generative force in the X direction shown in Fig. 12B.

Fig. 12E shows a force pattern portion of generative forces in the Y direction applied to the knob 51 in terms of Y positions when the X position is constant (x = x2). The generative force in the Y direction is constant at f1 near zero. When the y coordinate changes towards y1, and becomesy1 the generative force starts to decrease; at y = y2, it stops decreasing and starts to increase; at y = y3, it stops increasing and becomes the constant value f1 again. When the y coordinate changes further towards y5, and becomes y5, the generative force starts to decrease; at y = y6, it stops decreasing and starts increasing; and, at y = y7, it stops increasing and becomes the constant value f1 again.

Fig. 12F shows a force pattern portion of generative forces in the Y direction applied to the knob 51 in terms of the Y positions when the X position is constant (x = x4). A line at x = x4 does not pass through any of the areas defined by the dotted lines on the two-dimensional plane surface, so that the generative force in the Y direction of the force pattern portion is a constant value f1 regardless of the y coordinate.

Fig. 12G shows a force pattern portion of generative forces in the Y direction applied to the knob 51 in terms of the Y positions when the X position is constant (x = x6). The generative force in the Y direction of the force pattern changes in exactly the same way as the generative force in the Y direction shown in Fig. 12E.

The relationship between the generative forces and the coordinate positions of the table (pattern 1) comprises only a portion of the force pattern, so that the entire force pattern is formed by a larger number of x and y values. The first memory 56b and the second memory 57b store such entire force patterns.

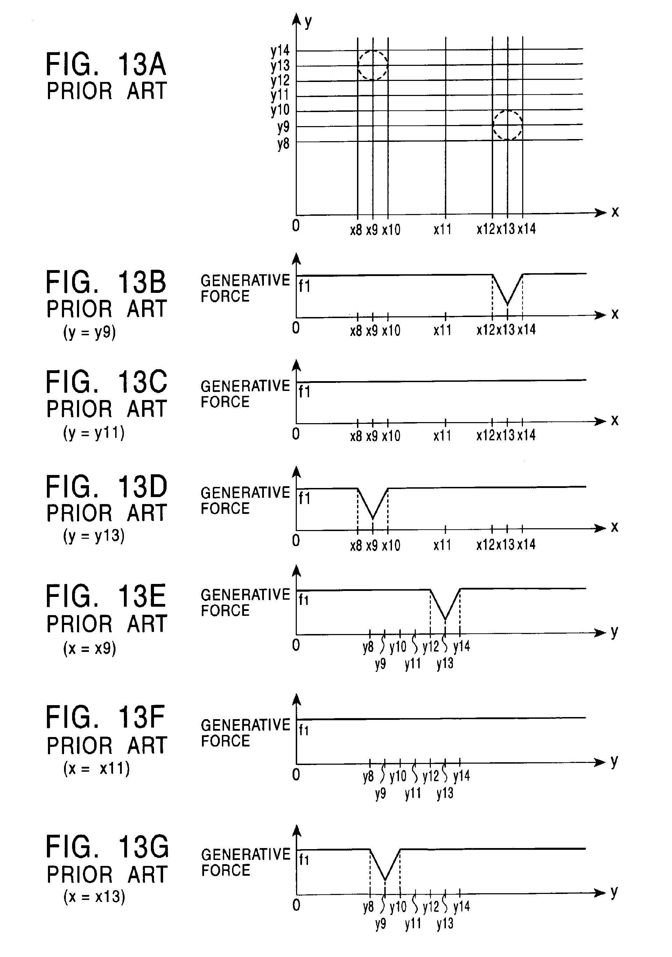

The relationships between the generative forces and the coordinate positions of another table (pattern 2) are shown in the form of graphs in Figs. 13A to 13G. The generative forces are applied to the knob 51 when the cursor is at various coordinate positions of the two-dimensional plane surface. As shown in Fig. 13A, there are a plurality of circular areas defined by dotted lines and an area other than these circular areas. At the area other than the circular areas, the generative forces applied to the knob 51 are constant values f1 in both the X and Y directions. At the circular areas, the generative forces applied to the knob 51 change in both the X and Y directions.

Fig. 13B shows a force pattern portion of generative forces in the X direction applied to the knob 51 in terms of X positions when the Y position is constant (y = y9). The generative force in the X direction is constant at f1 near zero. When the x coordinate changes towards x12, and becomes x12, the generative force starts to decrease; at x = x13, it stops decreasing and starts to increase; at x = x14, it stops increasing and becomes the constant value f1 again.

Fig. 13C shows a force pattern portion of generative forces in the X direction applied to the knob 51 in terms of the X positions when the Y position is constant (y = y11). A line at y = y11 does not pass through any of the circular areas defined by the dotted lines on the two-dimensional plane surface, so that the generative force in the X direction of the force pattern portion is a constant value F1 regardless of the x coordinate.

Fig. 13D shows a force pattern portion of generative forces in the X direction applied to the knob 51 in terms of the X positions when the Y position is constant (y = y13). The generative force in the X direction is constant at f1 near zero. When the x coordinate changes towards x12, at x = x8, which is a smaller value than x12, the generative force starts to decrease; at x = x9, it stops decreasing and starts to increase; at x = x10, it stops increasing and becomes the constant value f1 again.

Fig. 13E shows a force pattern portion of generative forces in the Y direction applied to the knob 51 at Y positions when the X position is constant (x = x9). The generative force in the Y direction is constant at f1 near zero. When the y coordinate changes towards y12, and becomes y1 2, the generative force starts to decrease; at y = y13, it stops decreasing and starts to increase; at y = y14, it stops increasing and becomes the constant value f1 again.

Fig. 13F shows a force pattern portion of generative forces in the Y direction applied to the knob 51 in terms of the Y positions when the X position is constant (x = x11). A line at x = x11 does not pass through any of the circular areas defined by the dotted lines on the two-dimensional plane surface, so that the generative force in the Y direction of the force pattern is constant at F1 regardless of the y coordinate.

Fig. 13G shows a force pattern portion of generative forces in the Y direction applied to the knob 51 in terms of the Y positions when the X position is constant (x = x13). The generative force in the Y direction is constant at f1 near zero. When the y coordinate changes towards y12, and becomes y8, which is a smaller value than y12, the generative force starts to decrease; at y = y9, it stops decreasing and starts to increase; at y = y10, it stops increasing and becomes the constant value f1 again.

The relationship between the generative forces and the coordinate positions of the table (pattern 2) comprises only a portion of the force pattern, so that the entire force pattern is formed by a larger number of x and y values. The first memory 56b and the second memory 57b store such entire force patterns.

However, in the related force applying device, since the memories 56b and 57b must store the force patterns of the generative forces over the entire area of the two-dimensional plane surface, a large amount of memory is required. In addition, since a still larger amount of memory is required in order to store force patterns of various forces, it is difficult to provide memories having the required amount of memory.

### SUMMARY OF THE INVENTION

Accordingly, it is an object of the present invention to provide a force applying device which requires only a small amount of memory in order to generate force patterns of many types of force.

To this end, according to the present invention, there is provided a force applying device comprising an operating unit for moving a cursor on a two-dimensional X-Y plane surface of a display; at least one actuator for applying a force to the operating unit in accordance with the movement of the operating unit; and a controlling unit for controlling the at least one actuator. The two-dimensional plane surface has a first area and at least one second area. When the cursor is on the first area, the at least one actuator applies a predetermined first force to the operating unit. When the cursor is on the at least one second area, the at least one actuator applies a second force, which is different from the first force, to the operating unit. The second force defines a predetermined unit force pattern and is stored in a first memory. The at least one second area where the second force is provided is disposed on the two-dimensional plane surface.

By virtue of this structure, the first memory stores a predetermined unit force pattern, and the at least one second area having the predetermined unit force pattern is disposed on the two-dimensional plane surface. Therefore, it is possible to provide a force applying device which requires only a small amount of memory in order to generate many types of force patterns.

In a first form, the at least one second area comprises a plurality of second areas.

By virtue of this structure, since there are a plurality of areas providing forces that differ from that provided at the first area, a complicated force pattern can be generated.

In a second form, the first memory stores a plurality of the unit force patterns that differ from each other, and the controlling unit selects a predetermined unit force pattern from the unit force patterns for the second area.

By virtue of this structure, since a plurality of different unit force patterns are stored, it is possible to generate a complicated force pattern which is a combination of any of these different unit force patterns.

In a third form, the position of the at least one second area on the two-dimensional plane surface is stored in a second memory and is determined using the second memory.

By virtue of this structure, since the position of the at least one second area is determined using the second memory, it is possible to generate other types of force patterns using a small amount of memory.

When the structure of the third form is used, in a fourth form, the second memory stores a table of coordinates of each unit force pattern, and, when one of the unit force patterns is selected, the position of the second area corresponding to the selected unit force pattern is determined using the second memory.

By virtue of this structure, since coordinates are stored for each unit force pattern, a force pattern can be generated using a small amount of memory.

When the structure of the fourth form is used, in a fifth form, the at least one second area is movable on the two-dimensional plane surface, and the table of coordinates is rewritten in accordance with the movement of the at least one second area on the two-dimensional plane surface and the rewritten table of coordinates is stored in the second memory.

By virtue of this structure, even if the at least one second area is movable, since the coordinate table is rewritten in accordance with the movement of the at least one second area, a force pattern can be generated using a small amount of memory.

In a sixth form, the unit force pattern of the second force that is provided at the at least one second area is such that the second force decreases from the value of the first force, and, then, increases to the value of the first force, so that a pulling sensation is provided at the operating unit.

By virtue of this structure, a force pattern which produces a pulling sensation can be provided at the operating unit.

When the structure of the sixth form is used, in a seventh form, the unit force pattern of the second force that is provided at the at least one second area is such that the second force gradually decreases from the value of the first force and, then, gradually increases to the value of the first force, so that a pulling sensation is provided at the operating unit.

By virtue of this structure, a force pattern which gradually produces a pulling sensation can be provided at the operating unit.

In an eighth form, the unit force pattern of the second force that is provided at the at least one second area is such that the second force decreases from the value of the first force and, then, increases, repeatedly, so that a sensation of roughness is provided at the operating unit.

By virtue of this structure, a force pattern which produces a rough feel can be provided at the operating unit.

In a ninth form, the unit force pattern of the second force that is provided at the at least one second area is such that the second force increases from the value of the first force, and, then, decreases, so that a tactile feel is provided at the operating unit.

By virtue of this structure, a force pattern which produces a tactile feel can be provided at the operating unit.

In a tenth form, the first force is applied at a constant value in the first area.

By virtue of this structure, a force pattern which produces a constant force can be provided at the operating unit.

In an eleventh form, the at least one actuator comprises an X actuator and a Y actuator, the X actuator applying a force in an x direction on the two-dimensional plane surface to the operating unit and the Y actuator applying a force in a y direction on the two-dimensional plane surface to the operating unit.

By virtue of this structure, by applying forces in the X and Y directions to the operating unit, a resultant of these forces can be applied to the operating unit.

When the structure of the eleventh form is used, in a twelfth form, the unit force pattern of the second force that is provided at the at least one second area is defined by the force in the x direction and/or the force in the y direction.

By virtue of this structure, by applying forces in the X and Y directions to the operating unit, a resultant of these forces can be applied to the operating unit.

### BRIEF DESCRIPTION OF THE DRAWINGS

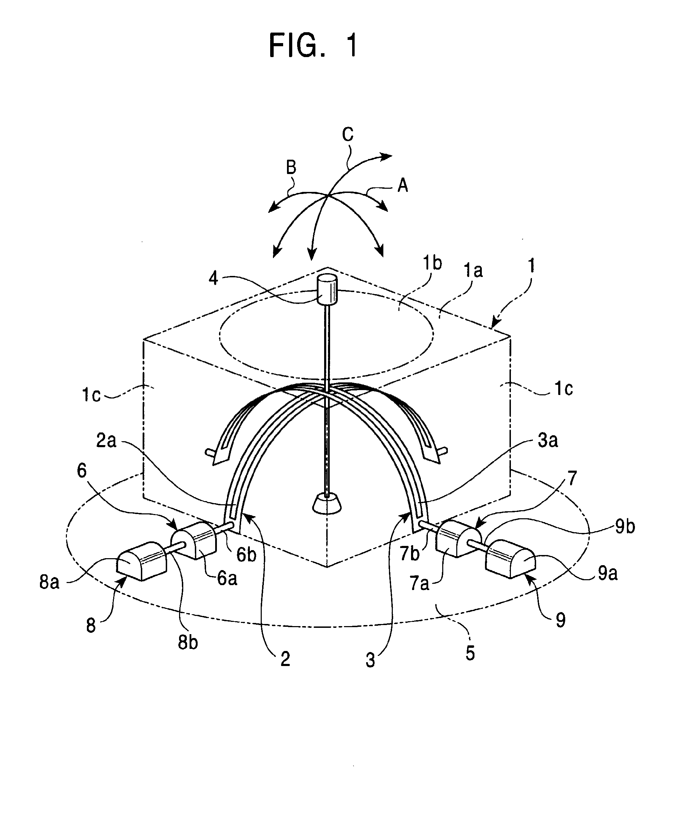

Fig. 1 is a perspective view of a force applying device of an embodiment of the present invention;

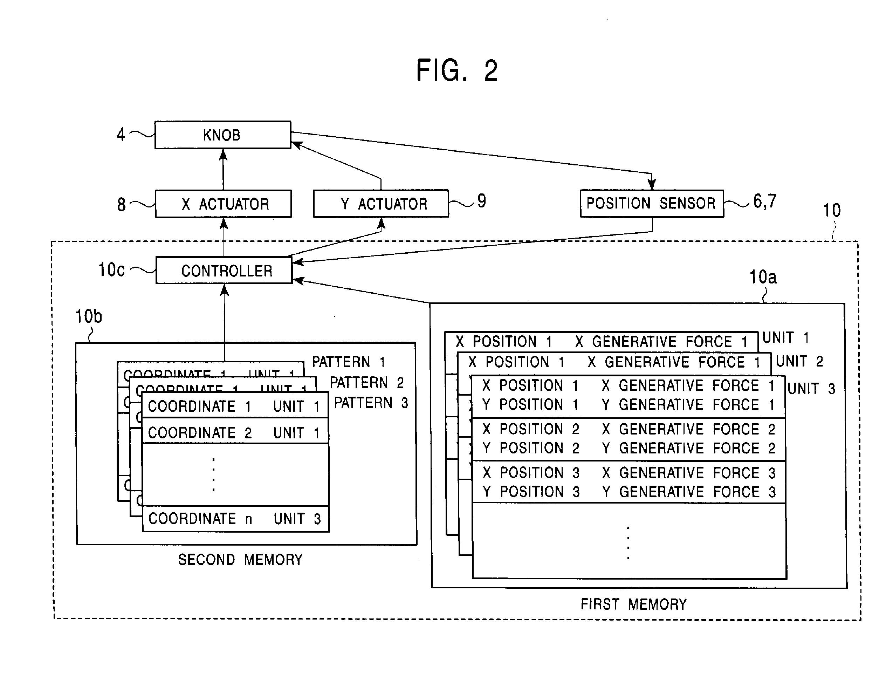

Fig. 2 is a block diagram of the force applying device of the embodiment of the present invention;

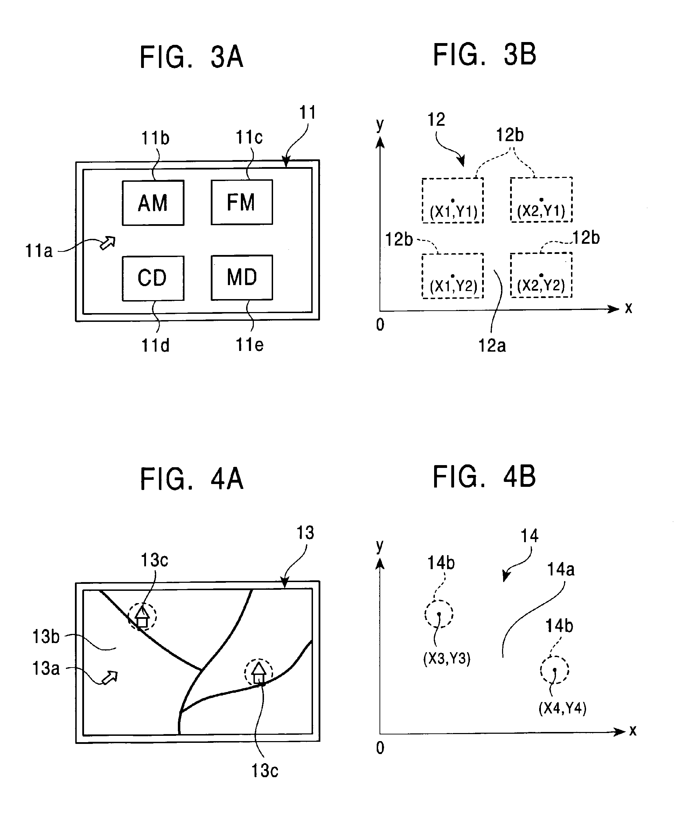

Figs. 3A and 3B illustrate a unit 1 force pattern of the force applying device of the embodiment of the present invention;
Figs. 4A and 4B illustrate a unit 2 force pattern of the force applying device of the embodiment of the present invention;

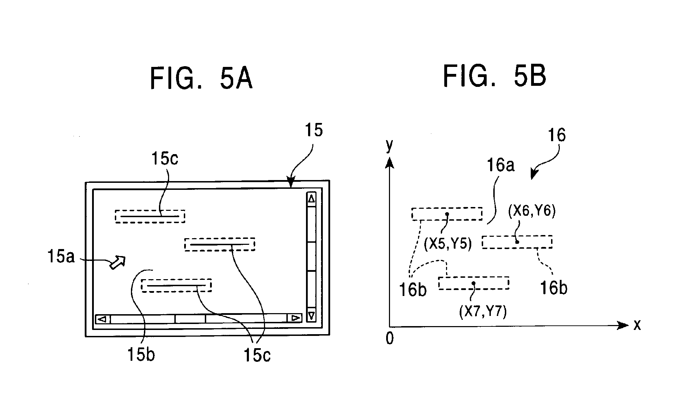

Figs. 5A and 5B illustrate a unit 3 force pattern of the force applying device of the embodiment of the present invention;

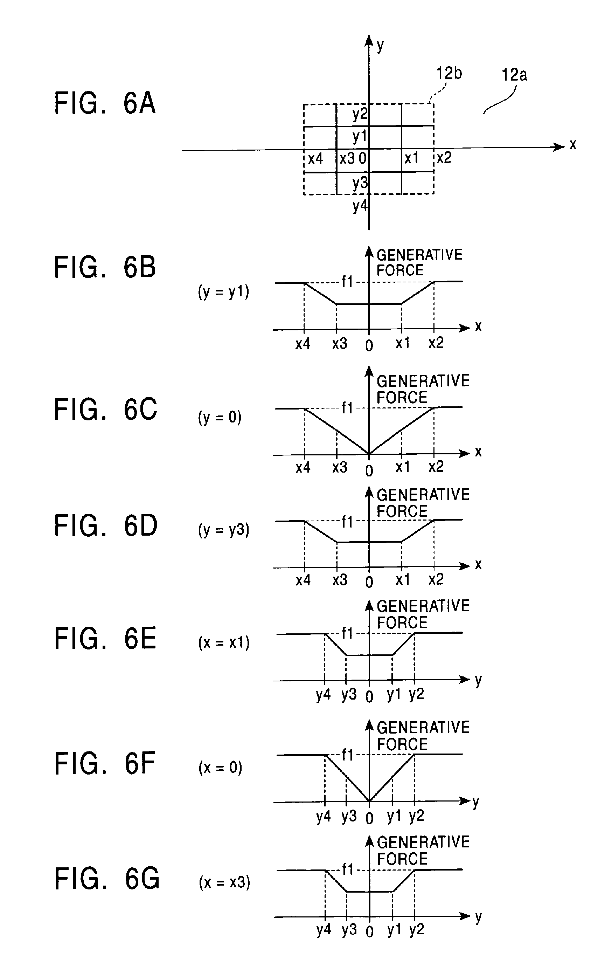

Figs. 6A to 6G illustrate switch pattern portions, displayed on a display of an automobile, of the force applying device of the embodiment of the present invention, and unit force pattern portions corresponding thereto;

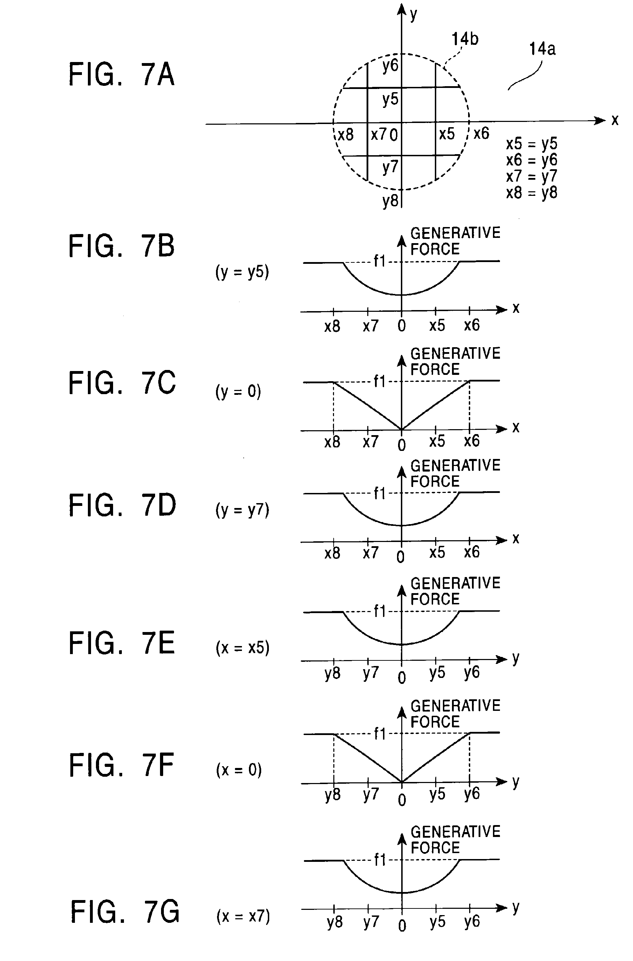

Figs. 7A to 7G illustrate landmarks, displayed on a display of a navigation system of an automobile, of the force applying device of the embodiment of the present invention, and unit force pattern portions corresponding thereto;

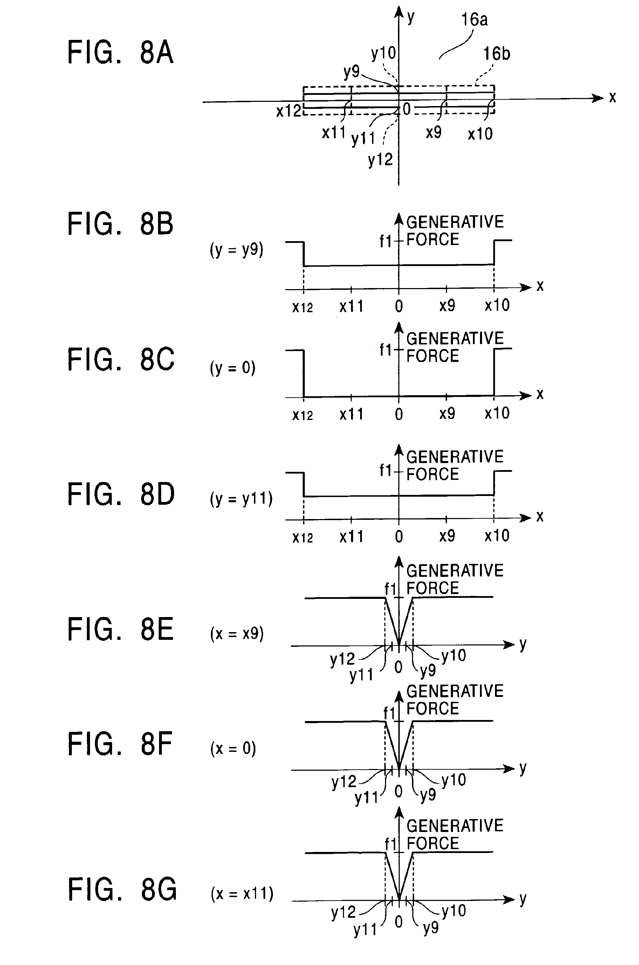

Figs. 8A to 8G illustrate links, which appear on a display of a personal computer, of the force applying device of the embodiment of the present invention, and unit force pattern portions corresponding thereto;

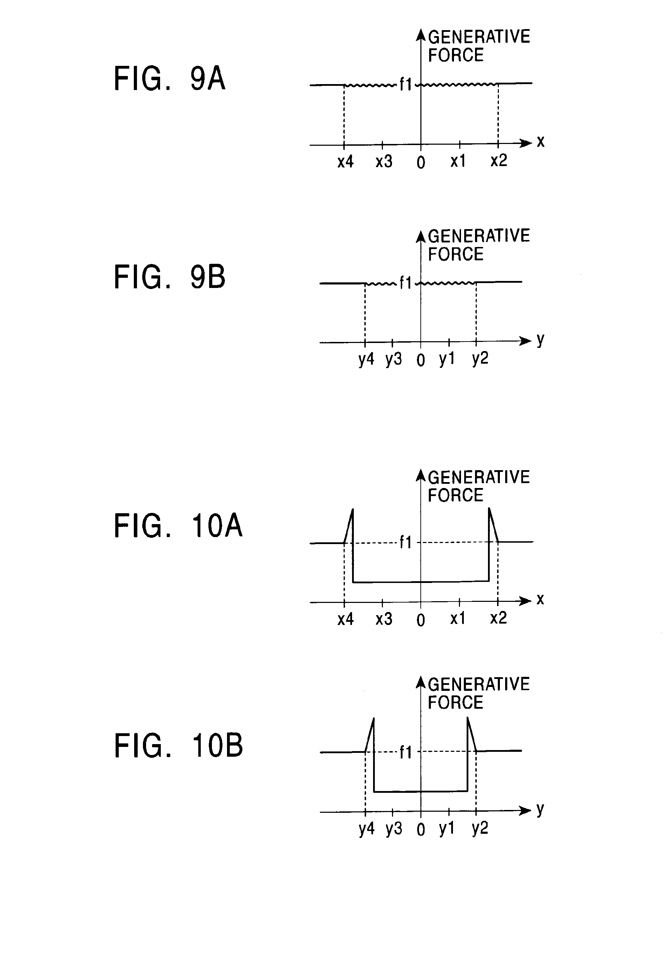

Figs. 9A and 9B illustrate a unit 4 force pattern of the force applying device of the embodiment of the present invention;
Figs. 10A and 10B illustrate a unit 5 force pattern of the force applying device of the embodiment of the present invention;
Fig. 11 is a block diagram of a related force applying device;
Figs. 12A to 12G illustrate a force pattern of generative forces of the related force applying device; and
Figs. 13A to 13G illustrate another force pattern of generative forces of the related force applying device.

### DESCRIPTION OF THE PREFERRED EMBODIMENT

A description of an embodiment of the present invention will be given with reference to Figs. 1 to 10. Fig. 1 is a perspective view of a force applying device of an embodiment of the present invention. Fig. 2 is a block diagram of the force applying device of the embodiment of the present invention. Figs. 3A and 3B illustrate a unit 1 force pattern of the force applying device of the embodiment of the present invention. Figs. 4A and 4B illustrate a unit 2 force pattern of the force applying device of the embodiment of the present invention. Figs. 5A and 5B illustrate a unit 3 force pattern of the force applying device of the embodiment of the present invention. Figs. 6A to 6G illustrate switch pattern portions, displayed on a display of an automobile, of the force applying device of the embodiment of the present invention, and unit force pattern portions corresponding thereto. Figs. 7A to 7G illustrate landmarks, displayed on a display of a navigation system of an automobile, of the force applying device of the embodiment of the present invention, and unit force pattern portions corresponding thereto. Figs. 8A to 8G illustrate links, which appear on a display of a personal computer, of the force applying device of the embodiment of the present invention, and unit force pattern portions corresponding thereto. Figs. 9A and 9B illustrate a unit 4 force pattern of the force applying device of the embodiment of the present invention. Figs. 10A and 10B illustrate a unit 5 force pattern of the force applying device of the embodiment of the present invention.

A description of the structure of the force applying device of the embodiment of the present invention will be given with reference to Fig. 1.

A box-shaped frame 1 is formed of insulating resin, and includes a square upper plate 1a, a circular hole 1b formed in the upper plate 1a, and four side walls 1c bent downward from the four peripheral sides of the upper plate 1a.

First and second moving-in-response members 2 and 3 are formed of metallic plates, have respective slits 2a and 3a at the middle portions, and are arc-shaped. The two ends of the first moving-in-response member 2 accommodated in the frame 1 are mounted to one of the pairs of opposing side walls 1c. With the mounted portions as fulcra, the first moving-in-response member 2 can rotate.

The second moving-in-response member 3 is perpendicular to the first moving-in-response member 2, and is accommodated in the frame 1 with the second moving-in-response member 3 crossing the first moving-in-response member 2. The two ends of the second moving-in-response member 3 are mounted to the other pair of opposing side walls 1c. With the mounted portions as fulcra, the second moving-in-response member 3 can rotate.

A knob 4, which is a straight operating unit, is inserted in the intersecting slits 2a and 3a of the respective first and second moving-in-response members 2 and 3, thereby making it engageable with the first and second moving-in-response members 2 and 3. One end of the knob 4 passes through the hole 1b of the frame 1 and protrudes therefrom, and the other end of the knob 4 is supported by a supporter 5 disposed below the frame 1, so that the knob 4 can tilt.

When the portion of the knob 4 protruding from the hole 1b is held and the knob 4 is operated, the knob 4 tilts with the portion of the knob 4 supported by the supporter 5 as a fulcrum. The tilting of the knob 4 causes the first and second moving-in-response members 2 and 3 in engagement with the knob 4 to rotate.

When the knob 4 is in a neutral position, the knob 4 is perpendicular to the supporter 5. When the knob 4 in the neutral position is tilted in either direction of a double-headed arrow A parallel to the slit 2a, the second moving-in-response member 3 engages the knob 4 and rotates.

When the knob 4 in the neutral position is tilted in either direction of a double-headed arrow B parallel to the slit 3a, the first moving-in-response member 2 engages the knob 4 and rotates. When the knob 4 at the middle in the directions of the double-headed arrows A and B is tilted in either direction of a double-headed arrow C, the first and second moving-in-response members 2 and 3 both engage the knob 4 and rotate.

An X position sensor 6 and a Y position sensor 7, which are rotating sensors or the like, have bodies 6a and 7a and rotary shafts 6b and 7b rotatably mounted to their respective bodies 6a and 7a. The X position sensor 6 and the Y position sensor 7 are mounted to the supporter 5 on the same plane, The rotary shaft 6b of the X position sensor 6 is connected to one end of the first moving-in-response member 2. Rotation of the first moving-in-response member 2 causes the rotary shaft 6b to rotate, resulting in operation of the X position sensor 6.

The rotary shaft 7b of the Y position sensor 7 is connected to one end of the second moving-in-response member 3. Rotation of the second moving-in-response member 3 causes the rotary shaft 7b to rotate, resulting in operation of the Y position sensor 7. The tilting position of the knob 4 is detected by the X position sensor 6 and the Y position sensor 7.

An X actuator 8 and a Y actuator 9, which are motors, have bodies 8a and 9a and rotary shafts 8b and 9b rotatably mounted to the respective bodies 8a and 9a. The X and Y actuators 8 and 9 are mounted to the supporter 5 on the same plane. The rotary shaft 8b of the X actuator 8 is connected to the rotary shaft 6b of the X position sensor 6. Rotational force of the X actuator 8 is transmitted to the rotary shaft 6b through the rotary shaft 8b. The rotary shaft 9b of the Y actuator 9 is connected to the rotary shaft 7b of the Y position sensor 7. Rotational force of the Y actuator 9 is transmitted to the rotary shaft 7b through the rotary shaft 9b.

Next, the operation of the force applying device of the embodiment of the present invention having the above-described structure will be described with reference to Figs. 1 and 2. First, when the knob 4 is tilted, the first and second moving-in-response members 2 and 3 rotate. By the rotation of the first and second moving-in-response members 2 and 3, the rotary shafts 6b and 7b rotate, so that the X position sensor 6 and the Y position sensor 7 are operated. By the operation of the X position sensor 6 and the Y position sensor 7, the tilting position of the knob 4 is detected.

When the knob 4 is tilted, signals are sent to the X actuator 8 and the Y actuator 9 from a controlling unit 10 in order to drive the X actuator 8 and the Y actuator 9. The driving forces are transmitted to the rotary shafts 6b and 7b of the respective X position sensor 6 and Y position sensor 7. In this state, the driving forces of the X actuator 8 and the Y actuator 9 are resistive forces (generative forces) with respect to the tilting of the knob 4.

The controlling unit 10 comprises a first memory 10a, a second memory 10b, and a controller 10c. The signals from the controlling unit 10 are selected by the controller 10c from the first memory 10a and the second memory 10b and combined. By the controller 10c, the combined signal is sent to the X actuator 8 and the Y actuator 9.

By this, the force applying device of the embodiment of the present invention operates.

The first memory 10a, the second memory 10b, and the controller 10c of the controlling unit 10 are described using the block diagram of Fig. 2.

A plurality of unit force patterns (unit 1, unit 2, unit 3, ...) which store the generative forces from the X actuator 8 and Y actuator 9 are stored in relatively small areas of a two-dimensional plane surface in the first memory 10a.

Each unit force pattern stores an X generative force 1 and a Y generative force 1. The X generative force 1 is a generative force in the x direction corresponding to an X position 1. The Y generative force 2 is a generative force in the Y direction corresponding to a Y position. The X position 1 and the Y position 1 are defined by x and y coordinates of a relatively small area of the two-dimensional plane surface. Similarly, each unit force pattern stores an X generative force 2 and a Y generative force 2. The X generative force 2 is a generative force in the X direction corresponding to an X position 2. The Y generative force 2 is a generative force in the Y direction corresponding to a Y position 2. The X position 2 and the X position 2 are defined by x and y coordinates of a relatively small area of the two-dimensional plane surface. Further, each unit force pattern stores an X generative force 3 and a Y generative force 3. The X generative force 3 is a generative force in the X direction corresponding to an X position 3. The Y generative force 3 is a generative force in the Y direction corresponding to a Y position 3. The X position 3 and the Y position 3 are defined by x and y coordinates of a relatively small area of the two-dimensional plane surface. Still further, X generative forces and Y generative forces corresponding to different positions on the two-dimensional plane surface are stored.

The second memory 10b stores a plurality of patterns (pattern 1, pattern 2, pattern 3, ...) which determine the manner of arrangement for unit force patterns selected from the plurality of unit force patterns stored in the first memory 10a at coordinates (coordinate 1, coordinate 2, ..., coordinate n) in the two-dimensional plane surface.

A controller 10c selects a specified unit force pattern from the plurality of unit force patterns (unit 1, unit 2, unit 3, ...) stored in the first memory 10b, and, at the same time, selects a specified pattern from the plurality of patterns (pattern 1, pattern 2, pattern 3, ...) which determine the manner of arrangement for the unit force patterns. Then, the controller 10c incorporates the specified unit force pattern in the specified pattern and forms a combined force pattern. The combined force pattern is sent to the X actuator 8 and the Y actuator 9 in order to drive the X actuator 8 and the Y actuator 9.

Next, a description of specific examples of using unit force patterns will be given.

Fig. 3A shows an automobile display 11, a cursor 11a disposed on the display 11, and switch pattern portions 11b, 11c, 11d, and 11e. The switch pattern portion 11b is used for switching AM radio. The switch pattern portion 11c is used for switching FM radio. The switch pattern portion 11d is used for switching a compact disk (CD). The switch pattern portion 11e is used for switching a magnetic disk (MD). When an occupant of an automobile moves the cursor 11a onto a switch pattern portion by the knob 4 and presses a switch (not shown), a required function switch is turned on. When the occupant of the automobile switches to another required function by, for example, a switch (not shown), the required switch pattern portion appears on a display screen. Depending upon the required function, the switch pattern portion may or may not be of the same size or be disposed at the same position.

Fig. 3B shows a two-dimensional plane surface 12 of the display 11, which is divided into a plurality of second areas 12b corresponding to the switch pattern portions 11b, 11c, 11d, and 11e and being defined by dots, and a first area 12a. A first force is generated at the first area 12a and a second force is generated at each second area 12b. Each second force defines a predetermined unit force pattern (unit 1). The central positions of the second areas 12b that generate their respective second forces are defined by a plurality of coordinates (X1, Y1), (X2, Y1), (X1, Y2), and (X2, Y2). The cursor 11a on the display 11 moves on the display 11 by tilting the knob 4. When the cursor 11a is on the first area 12a, the knob 4 receives the first force, whereas, when the cursor 11a is on a second area 12b, it receives a second force. When the size and position of a switch pattern portion changes when switching switch pattern portions, the size and position of the second area is changed in correspondence with the size and position of the switch pattern portion.

Fig. 4A shows a display 13 of a navigation system of an automobile, a cursor 13a on the display 13, a map screen 13b, and landmarks 13c within the map screen 13b. The landmarks 13c are, for example, public facilities. When an occupant of the automobile moves the cursor 13a onto a landmark 13c by the knob 4, and presses a switch (not shown), information of the landmark 13c is read out.

Fig. 4B shows a two-dimensional plane surface 14 of the display 13, which is divided into a plurality of second areas 14b corresponding to the landmarks 13c and being defined by dotted lines, and a first area 14a. A first force is generated at the first area 14a and a second force is generated at each second area 14b. Each second force defines a predetermined unit force pattern (unit 2). The central positions of the second areas 14b that generate their respective second forces are defined by a plurality of coordinates (X3, Y3) and (X4, Y4). The cursor 13a on the display 13 moves on the display 13 by tilting the knob 4. When the cursor 13a is on the first area 14a, the knob 4 receives the first force, whereas, when the cursor 13a is on a second area 14b, the knob 4 receives a second force. The map screen 13b of the display 13 of the navigation system of the automobile moves as the automobile moves. Therefore, the positions of the landmarks 13c change. The changes make it necessary to change the positions of the second areas 14b. The plurality of initially set coordinates (X3, Y3) and (X4, Y4) are instantly rewritten by reading the positions to which the landmarks 13c have moved on the map screen 13b of the display 13.

Fig. 5A shows a display 15 of a notebook personal computer, a cursor 15a on the display 15, a display screen 15b, and website addresses 15c to be linked within the display screen 15b. When the user of the personal computer moves the cursor 15a onto an address 15c by the knob 4 and presses a switch (not shown), the website that has been linked can be viewed.

Fig. 5B shows a two-dimensional plane surface 16 of the display 15, which is divided into a plurality of second areas 16b corresponding to the addresses 15c and being defined by dotted lines, and a first area 16a. A first force is generated at the first area 16a and a second force is generated at each second area 16b. Each second force defines a predetermined unit force pattern (unit 3). The central positions of the second areas 16b that generate their respective second forces are defined by a plurality of coordinates (X5, Y5), (X6, Y6), and (X7, Y7). The cursor 15a on the display 15 moves on the display 15 by tilting the knob 4. When the cursor 15a is on the first area 16a, the knob 4 receives the first force, whereas, when the cursor 15a is on a second area 16b, the knob 4 receives a second force. The positions of the addresses 15c on the display 15 of the personal computer move every time the screen of the display 15 of the personal computer changes. Therefore, it necessary to change the positions of the second areas 16b. The plurality of initially set coordinates (X5, Y5), (X6, Y6), and (X7, Y7) are instantly rewritten by reading the positions to which the addresses 15c have moved on the display screen 15b of the display 15.

Next, a description of the unit force pattern used in each of the above-described examples will be given. First, the unit force pattern (unit 1) used in the display 11 of the automobile will be described. Here, as shown in Fig. 6A, the case where the center of a second area 12b is placed at the origin of the two-dimensional plane surface, and the first area 12a is disposed around the second area 12b is considered. Figs. 6B, 6C, and 6D illustrate force pattern portions of generative forces in the X direction applied to the knob 4 in terms of X positions when the Y positions are constant at y =y1 , 0, and y3, respectively.

When y = y1 and x ≤ x4, the generative force is equal to f1. When the X position changes towards x3, the generative force decreases linearly. At x = x3, the generative force stops decreasing and becomes a constant value. When the X position changes further towards x2, and becomes x1, the generative force starts increasing linearly from the constant value. At x = x2, the generative force becomes f1, and remains constant from x2 onwards (x > x2).

When y = 0 and x ≤ x4, the generative force is equal to f1. When the X position changes towards x0, the generative force continues decreasing linearly until x = 0 where the generative force is zero. When the X position changes further towards x1, the generative force starts increasing linearly. At x = x2, the generative force becomes f1, and remains constant at f1 from x2 onwards (x > x2).

When y = y3, the generative force changes in the same way as it does when y = y1.

Figs. 6E, 6F, and 6G illustrate force pattern portions of generative forces in the Y direction applied to the knob 4 in terms of Y positions when the X positions are constant at x = x1, 0, and x3, respectively.

When x = x1 and y ≤ y4, the generative force is equal to f1. When the Y position changes towards y3, the generative force decreases. At y = y3, the generative force stops decreasing and becomes a constant value. When the position Y further changes towards y1 and becomes y1 the generative force starts increasing from the constant value. At y = y2, the generative force becomes f1, and remains constant at f1 from y2 onwards (y > y2).

When x = 0 and y ≤ y4, the generative force is equal to f1. When the Y position changes towards y0, the generative force continues decreasing until y = 0, where the generative force becomes zero. When the Y position changes further towards y2, the generative force continues increasing, and becomes a constant at f1 from y2 onwards (y > y2).

When x = x3, the generative force changes in the same way as it does when x = x1.

At the first area 12a (which is the only area other than the second areas 12b), the first force (which is a generative force exerted upon the knob 4) is a constant value in both the x and y directions and is equal to f1. Therefore, for the unit force pattern (unit 1) used in the display 11 of the automobile, the generative force from the second area is equal to or less than the generative force from the first area 12a. Therefore, when the cursor is moved to the second area 12b from the first area 12a, a force which pulls towards the center of the second area 12b is applied to the knob 4 as a second force.

Next, the unit force pattern (unit 2) used in the display 13 of the navigation system of the automobile will be described. Here, as shown in Fig. 7A, the case where the center of a second area 14b is placed at the origin of the two-dimensional plane surface, and the first area 14a is disposed around the second area 14b is considered. Figs. 7B, 7C, and 7D illustrate force pattern portions of generative forces in the X direction applied to the knob 4 in terms of X positions when the Y positions are constant at y = y5, 0, and y7, respectively.

When y = y5, and the X position is at an end of or at the negative side of this end, the generative force is equal to f1. When, for example, the X position changes towards x = 0 from x8, the generative force decreases in the form of an arc. At x = 0, the generative force stops decreasing. When the X position further changes towards x6, the generative force starts increasing in the form of an arc. When the X position changes to a value corresponding to that at the other end of the second area, the generative force becomes equal to f1. When the X position changes further to a value corresponding to that beyond and at the positive side of the other end of the second area, the generative force becomes constant at f1.

When y = 0 and x ≤ x8, the generative force is equal to f1. When the X position changes towards x0, the generative force continues decreasing linearly until x = 0, where the generative force becomes zero. When the X position changes further towards x6, the generative force continues increasing linearly, and becomes equal to f1 at x > x6, and remains constant at f1 from x6 onwards (x < x6).

When y = y7, the generative force changes in the same way as it does when y = y5.

Figs. 7E, 7F, and 7G illustrate force pattern portions of generative forces in the Y direction applied to the knob 4 in terms of Y positions when the X positions are constant at x = x5, 0, and x7, respectively.

When x = x5, the generative force in terms of the Y position changes in the same way as the generative force in terms of the X position when y = y5.

When x = 0, the generative force in terms of the Y position changes in the same way as the generative force in terms of the X position when y = y0.

When x = x7, the generative force changes in the same way as it does when x = x5.

At the first area 14a (which is the only area other than the second areas 14b), the first force (which is a generative force applied to the knob 4) is a constant value in both the x and y directions and is equal to f1. Therefore, for the unit force pattern (unit 2) used in the display 13 of the navigation system of the automobile, the generative force from the second area 14b is equal to or less than the generative force from the first area 14a. Therefore, when the cursor is moved to the second area 14b from the first area 14a, a force which pulls towards the center of the second area 14b is applied to the knob 4 as a second force.

Next, the unit force pattern (unit 3) used in the display 15 of the personal computer will be described. Here, as shown in Fig. 8A, the case where the center of a second area 16b is placed at the origin of the two-dimensional plane surface, and the first area 16a is disposed around the second area 16b is considered. Figs. 8B, 8C, and 8D illustrate force pattern portions of generative forces in the X direction applied to the knob 4 in terms of X positions when the y positions are constant at y = y9, 0, and y11, respectively.

When y = y9 and x < x12, the generative force is equal to f1. Even if the X position changes from x12 to x10, the generative force is a constant value that is less than f1. When x > x10, the generative force is constant at f1.

When y = 0 and x < x12, the generative force is constant at f1. Even if the X position changes from x = x12 to x = x10, the generative force is constant at zero. When x > x10, the generative force is constant at f1.

When y = y11, the generative force changes in the same way as when y = y9.

Figs. 8E, 8F, and 8G illustrate force pattern portions of generative forces in the Y direction applied to the knob 4 in terms of the Y positions when the X positions are constant at x = x9, 0, and x11.

When x = x9 and y s y12, the generative force is equal to f1. When the Y position changes towards y0, the generative force decreases linearly. At y = 0, the generative force stops decreasing and becomes zero. When the Y position further changes towards y10, the generative force starts increasing linearly from y = 0. At y = y10, the generative force becomes f1, and remains constant at f1 fromy1 0 onwards (y > y10).

When x = 0, the generative force in terms of the Y position changes in the same way as the generative force when x = x9.

When x = x11, the generative force in terms of the Y position also changes in the same way as the generative force when x = x9.

At the first area 16a (which is the only area other than the second areas 16b), the first force (which is a generative force applied to the knob 4) is constant in both the X and Y directions and is equal to f1. Therefore, for the unit force pattern (unit 3) used in the display 15 of the personal computer, the generative force from the second area 16b is equal to or less than the generative force from the first area 16a. Therefore, when the cursor is moved to the second area 16b from the first area 16a, a force which pulls towards the center of the second area 16b is applied to the knob 4 as a second force.

Next, a unit 4 force pattern will be described as a modification of the unit 1 force pattern.

In the unit 4 force pattern, the generative force in the X direction in terms of the X position when the Y position is constant in a second area 12b where the unit 1 force pattern is realized is replaced by a generative force of a force pattern shown in Fig. 9A, and the generative force in the Y direction in terms of the Y position when the X position is constant is replaced by a generative force of a force pattern shown in Fig. 9B.

When x ≤ x4, the generative force illustrated in Fig. 9A is f1 for any Y position. As the X position changes towards x2, the generative force repeatedly increases and decreases from f1 with its average value almost unchanged up to x= x2. When x = x2, the generative force is equal to f1. Even at x > x2, the generative force is constant at f1.

When y = y4, the generative force shown in Fig. 9B is f1 for any X position. As the Y position changes towards y2, the generative force repeatedly increases and decreases from f1, with its average value almost unchanged up to y = y2. When y = y2, the generative force is equal to f1. Even at y > y2, the generative force is constant at f1.

The force pattern (unit 4) is such that the generative force repeatedly increases and decreases by small amounts, so that the force applied to the knob 4 provides a sensation of roughness. Therefore, when, in the display 11 of the automobile shown in Fig. 3, the cursor 11a is moved by the knob 4 into any one of the second areas 12b corresponding to the switch pattern portions 11b, 11c, 11d, and 11e, a second force that provides a sensation of roughness is applied to the knob 4.

Next, a unit 5 force pattern will be described as a modification of the unit 1 force pattern.

In the unit 5 force pattern, the generative force in the X direction in terms of the X position when the Y position is constant in a second area 12b where the unit 1 force pattern is realized is replaced by a generative force of a force pattern illustrated in Fig. 10A, and the generative force in the Y direction in terms of the Y position when the X position is constant is replaced by a generative force of a force pattern shown in Fig. 10B. When x ≤ x4, the generative force shown in Fig. 10A is f1 for any Y position. As the X position changes towards x2, the generative force gradually increases from the f1 value, and decreases suddenly to a value less than f1. When the X position further changes towards x2, the generative force is a constant value that is less than f1. Near the x2 position, the generative force increases suddenly, and, then, gradually decreases. At x = x2, the generative force is constant at f1.

When y ≤ y4, the generative force shown in Fig. 10B is f1 for any X position. As the Y position changes towards y2, the generative force gradually increases from f1, and, then, suddenly, decreases to a value less than f1. When the Y position further changes towards y2, the generative force is equal to a constant value that is less than f1. Near the y2 position, the generative force increases suddenly, and, then, gradually decreases. At y = y2, the generative force becomes equal to f1 again. Beyond that, when y > y2, the generative force remains constant at f1.

The unit 5 force pattern is such that the generative force repeatedly increases and decreases by small amounts, so that the force applied to the knob 4 provides a tactile sensation. Therefore, when, in the display 11 of the automobile shown in Fig. 3, the cursor 11a is moved by the knob 4 into any one of the second areas 12b corresponding to the switch pattern portions 11b, 11c, 11d, and 11e, a second force that provides a tactile sensation is applied to the knob 4 near their boundaries.

As described above, the force applying device comprises an operating unit for moving a cursor on a two-dimensional X-Y plane surface of a display; at least one actuator for applying a force to the operating unit in accordance with the movement of the operating unit; and a controlling unit for controlling the at least one actuator. The two-dimensional plane surface has a first area and at least one second area. When the cursor is on the first area, the at least one actuator applies a predetermined first force to the operating unit. When the cursor is on the at least one second area, the at least one actuator applies a second force, which is different from the first force, to the operating unit. The second force defines a predetermined unit force pattern and is stored in a first memory. The at least one second area which provides the second force is disposed on the two-dimensional plane surface.

By virtue of this structure, since predetermined unit force patterns are stored in the first memory, and second areas providing the respective unit force patterns are disposed on the two-dimensional plane surface, only a small amount of memory is required. Therefore, a force applying device which can generate many types of force patterns can be provided.

## Claims

1. A force applying device comprising:
an operating unit for moving a cursor on a two-dimensional X-Y plane surface of a display;
at least one actuator for applying a force to the operating unit in accordance with the movement of the operating unit; and
a controlling unit for controlling the at least one actuator,
wherein the two-dimensional plane surface has a first area and at least one second area;
wherein, when the cursor is on the first area, the at least one actuator applies a predetermined first force to the operating unit;
wherein, when the cursor is on the at least one second area, the at least one actuator applies a second force, which is different from the first force, to the operating unit;
wherein the second force defines a predetermined unit force pattern and is stored in a first memory; and
wherein the at least one second area where the second force is provided is disposed on the two-dimensional plane surface.

2. A force applying device according to Claim 1,
wherein the at least one second area comprises a plurality of second areas.

3. A force applying device according to Claim 1 or 2,
wherein the first memory stores a plurality of the unit force patterns that differ from each other, and wherein the controlling unit selects a predetermined unit force pattern from the unit force patterns for the second area.

4. A force applying device according to any of Claims 1 to 3, wherein the position of the at least one second area on the two-dimensional plane surface is stored in a second memory and is determined using the second memory.

5. A force applying device according to Claim 4,
wherein the second memory stores a table of coordinates of each unit force pattern, and wherein, when one of the unit force patterns is selected, the position of the second area corresponding to the selected unit force pattern is determined using the second memory.

6. A force applying device according to Claim 5,
wherein the at least one second area is movable on the two-dimensional plane surface, and wherein the table of coordinates is rewritten in accordance with the movement of the at least one second area on the two-dimensional plane surface and the rewritten table of coordinates is stored in the second memory.

7. A force applying device according to any of Claims 1 to 6, wherein the unit force pattern of the second force that is provided at the at least one second area is such that the second force decreases from the value of the first force, and, then, increases to the value of the first force, so that a pulling sensation is provided at the operating unit.

8. A force applying device according to Claim 7,
wherein the unit force pattern of the second force that is provided at the at least one second area is such that the second force gradually decreases from the value of the first force and, then, gradually increases to the value of the first force, so that a pulling sensation is provided at the operating unit.

9. A force applying device according to any of Claims 1 to 6, wherein the unit force pattern of the second force that is provided at the at least one second area is such that the second force decreases from the value of the first force and, then, increases, repeatedly, so that a sensation of roughness is provided at the operating unit.

10. A force applying device according to any of Claims 1 to 6, wherein the unit force pattern of the second force that is provided at the at least one second area is such that the second force increases from the value of the first force, and, then, decreases, so that a tactile feel is provided at the operating unit.

11. A force applying device according to any of Claims 1 to 10, wherein the first force is applied at a constant value in the first area.

12. A force applying device according to any of Claims 1 to 11, wherein the at least one actuator comprises an X actuator and a Y actuator, the X actuator applying a force in an x direction on the two-dimensional plane surface to the operating unit and the Y actuator applying a force in a y direction on the two-dimensional plane surface to the operating unit.

13. A force applying device according to Claim 12,
wherein the unit force pattern of the second force that is provided at the at least one second area is defined by the force in the x direction and/or the force in the y direction.

14. A force applying device according to any of Claims 2 to 13, wherein the positions of the second areas on the two-dimensional plane surface are stored in a second memory and are determined using the second memory.
